# FASCICULE DE BREVET EUROPEEN

(11) **EP 1 777 257 B1**
(45) Date de publication et mention de la délivrance du brevet: **22.08.2018**
(21) Numéro de dépôt: 06122450.7
(22) Date de dépôt: 17.10.2006
(51) Int. Cl.: C08K 5/5313, C09K 21/12, B32B 27/18, B32B 27/30, C08L 33/12, C08L 33/02

(54) **COMPOSITION MÉTHACRYLIQUE IGNIFUGÉE**
FLAMMGESCHÜTZTE METHACRYLZUSAMMENSETZUNG
FIREPROOF METHACRYLIC COMPOSITION

(30) Priorité: 20.10.2005 FR 0510700; 06.12.2005 US 742757 P
(43) Date de publication de la demande: 25.04.2007
(73) Titulaire: ARKEMA FRANCE, 92700 Colombes (FR)
(72) Inventeur: Texeira-Pires, José, 92200, NEUILLY-SUR-SEINE (FR); Lambert, Pierre-Louis, 64230, LESCAR (FR); Delprat, Patrick, 64230, LESCAR (FR)

(56) Documents cités:
- EP-A- 1 544 206
- EP-A- 1 544 227
- EP-A2- 1 498 449
- WO-A-03/087230
- WO-A-2005/061606
- DE-A1- 3 838 480
- DE-A1- 10 309 805
- GB-A- 1 228 517
- US-A- 6 110 559
- US-B1- 6 255 371
- US-B1- 6 420 459

## Description

La présente invention est relative à une composition méthacrylique ignifugée. Cette composition peut être utilisée pour la fabrication d'articles électroménagers (tels que des capots de téléviseurs, les couvercles des appareils électriques ou électroniques,...) ou bien de pièces qui sont utilisées dans le bâtiment (par exemple des profilés). Elle peut aussi être utilisée pour obtenir un revêtement ignifuge, notamment par un procédé de coextrusion. L'invention est aussi relative au procédé de transformation de la composition pour obtenir une structure multicouche comprenant une couche de la composition et une couche d'un polymère thermoplastique, ainsi qu'à la structure multicouche en elle-même.

### [Le problème technique]

La législation impose de plus en plus que les matériaux, notamment ceux utilisés dans le domaine électrique, électronique ou dans le bâtiment, soient ignifugés afin de minimiser le développement des incendies. Les contraintes liées à l'environnement imposent également que les formulations ignifuges ne contiennent pas d'halogène (on parle de formulations sans halogène ou « halogen-free ») car lors de la combustion des agents ignifugeants halogénés, des gaz acides et toxiques sont susceptibles d'être libérés.

L'ajout d'un ou plusieurs agent(s) ignifugeant(s) ne doit pas entraîner une altération des propriétés du polymère méthacrylique comme par exemple la fluidité ou la résistance thermomécanique (VICAT).

La Demanderesse a constaté qu'il est possible d'obtenir une composition méthacrylique ignifugée classée V1 à 3 mm selon le test UL-94 tout en conservant de bonnes propriétés mécaniques, notamment sa température VICAT, ainsi qu'une bonne fluidité. Cette composition peut revêtir un polymère thermoplastique.

### [L'art antérieur]

La demande US 2005/0143503 décrit un agent ignifugeant sous forme de particules agglomérées. Les particules sont constituées de 99,99 à 80% d'un (di)phosphinate et de 0,01 à 20% d'un liant polymère qui peut être à base d'acrylates.

La demande internationale WO 2005/061606 décrit l'ignifugation d'un polymère thermoplastique par un mélange d'un composé (F1) semblable au composé (I) qui est utilisé dans la présente invention, d'un composé (F2) qui est un produit de réaction entre l'acide phosphorique et la mélamine et/ou un produit de réaction entre l'acide phosphorique et un dérivé de condensation de la mélamine et d'un composé (F3) qui est un dérivé de condensation de la mélamine.

Le brevet américain US 6420459 ou la demande internationale WO 03/087230 décrivent l'ignifugation d'un polymère thermodur à l'aide d'un agent ignifugeant de formule (I) ou (II).

La demande EP 1386942 décrit une combinaison ignifugeante composée d'un (di)phosphinate et d'un composé azoté de type mélamine. La combinaison peut être utilisée dans plusieurs types de polymères thermoplastiques, notamment le polyméthacrylate. La teneur en chacun des deux agents ignifugeants peut varier en poids de 1 à 30%, de préférence de 3 à 20%, encore plus préférentiellement de 3 à 15%, par rapport au polymère thermoplastique. Aucun exemple n'est relatif à un polymère méthacrylique.

Les brevets DE 2447727 et DE 2252258 décrivent respectivement des polyamides ou des polyesters ignifugés à l'aide de (di)phosphinates.

Le brevet US6255371 B1 décrit l'utilisation de (di)phosphinates comme agents ignifugeants de polymères thermoplastiques. Le polymère thermoplastique peut être notamment un polyméthacrylate. La teneur en agent ignifugeant est comprise en poids entre 1 et 30%, de préférence entre 3 et 20%, encore plus préférentiellement entre 3 et 15%, par rapport au polymère thermoplastique. Aucun exemple n'est relatif à un polymère méthacrylique.

La demande EP 1013713 décrit une structure multicouche comprenant une couche d'une composition méthacrylique ignifugée à l'aide d'un composé halogéné et une couche d'un polymère thermoplastique, comme le PVC.

La demande DE 10309805 décrit des compositions à base de matrice thermoplastique comprenant un système d'ignifugation qui comprend un sel d'acide phosphonique ou un sel d'acide diphosphonique , un composant B et un composant C. Le composant C peut comprendre le méthacrylate de méthyle..

Le brevet US 6420459 B1 décrit des compositions thermodurcissables ignifugées qui comprennent des résines thermodurcissables et comme agent ignifugeant un sel d'acide phosphinique ou un sel d'acide diphosphonique. Le méthacrylate de méthyle peut être utilisé comme monomère copolymerisable si les résines sont formées à partir de polyesters non saturés.

La demande EP 1544206 décrit des compositions à base de matrice thermoplastique comprenant un système d'ignifugation qui comprend un sel d'acide phosphinique, la matrice thermoplastique peut être un polyméthacrylate.

La demande EP 1498449 décrit des matériaux élastiques qui comprennent comme agent ignifugeant un sel d'acide phosphinique ou un sel d'acide diphosphonique.

Le brevet US6110559 A décrit une coextrusion d'un polymère thermoplastique et d'une composition qui comprend un polymère et un agent ignifugeant.

Dans aucun de ces documents, il n'est suggéré que l'incorporation de 15 à 25 parts d'un agent ignifugeant de formule (I) ou (II) dans 100 parts d'un polymère méthacrylique permet d'obtenir une composition ignifugée sans halogène qui soit V1 à 3 mm et qui conserve les bonnes propriétés mécaniques du polymère méthacrylique.

### [Description détaillée de l'invention]

La présente invention concerne une composition méthacrylique ignifugée selon la revendication 1, un procédé selon la revendication 7, une structure multicouche selon la revendication 13 et une utilisation selon la revendication 14.

La présente invention concerne une composition méthacrylique ignifugée à base d'un polymère méthacrylique comprenant pour 100 parts de polymère méthacrylique de 15 à 25 parts, avantageusement de 17 à 25 parts, de préférence de 17 à 23 parts, de façon encore plus préférentielle de 19 à 22 parts d'au moins un agent ignifugeant de formule (I) ou (II) : 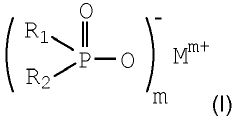 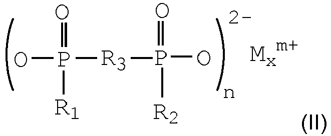 dans lesquelles :
R₁ et R₂ désignent des groupements alkyle en C₁-C₆, linéaires ou branchés et/ou aryle ;
R₃ désigne un groupement alkylène en C₁-C₁₀, linéaire ou branché, arylène en C₆-C₁₀, alkylarylène ou arylalkylène ;
M désigne Mg, Ca, Al, Sb, Sn, Ge, Ti, Zn, Fe, Zr, Ce, Bi, Sr, Mn, Li, Na, K ;
m est un entier entre 1 et 4 ;
n est un entier entre 1 et 4 ;
x est un entier entre 1 et 4.
et le polymère méthacrylique est un homo- ou copolymère de méthacrylate de méthyle (MAM) comprenant en poids au moins 70% de MAM.

**Le polymère méthacrylique** est un homo- ou copolymère de méthacrylate de méthyle (MAM) comprenant en poids au moins 70%, avantageusement 80%, de MAM. De préférence, il s'agit d'un copolymère de MAM et d'au moins un comonomère ayant au moins une insaturation éthylénique copolymérisable avec le MAM.

Le comonomère est choisi dans la liste des :
- monomères acryliques de formule CH₂=CH-C(=O)-O-R₁ où R₁ désigne un atome d'hydrogène, un groupement alkyle en C₁-C₄₀ linéaire, cyclique ou ramifié éventuellement substitué par un atome d'halogène, un groupement hydroxy, alcoxy, cyano, amino ou époxy tels que par exemple l'acide acrylique, l'acrylate de méthyle, d'éthyle, de propyle, de n-butyle, d'isobutyle, de tertiobutyle, de 2-éthylhexyle, de glycidyle, les acrylates d'hydroxyalkyle, l'acrylonitrile ;
- les monomères méthacryliques de formule CH₂=C(CH₃)-C(=O)-O-R₂ où R₂ désigne un atome d'hydrogène, un groupement alkyle en C₂-C₄₀ linéaire, cyclique ou ramifié éventuellement substitué par un atome d'halogène, un groupement hydroxy, alcoxy, cyano, amino ou époxy tels que par exemple l'acide méthacrylique, le méthacrylate de méthyle, d'éthyle, de propyle, de n-butyle, d'isobutyle, de tertiobutyle, de 2-éthylhexyle, de glycidyle, les méthacrylates d'hydroxyalkyle, le méthacrylonitrile ;
- les monomères vinylaromatiques tels que par exemple le styrène, les styrènes substitués, l'alpha-méthylstyrène, le monochlorostyrène, le tertbutyl styrène.

Le copolymère comprend en poids de 70 à 99,5%, avantageusement de 80 à 99,5%, de préférence de 80 à 98% de MAM pour respectivement de 0,5 à 30%, avantageusement de 0,5 à 20%, de préférence de 2 à 20% d'au moins un comonomère. De préférence, le polymère méthacrylique a un melt-index compris de 0,5 à 30, de préférence entre 0,5 et 20 g/10 min (230°C, 3,8 kg) selon **ISO 1133.**

Le polymère méthacrylique peut être renforcé à l'impact à l'aide d'un modifiant choc, par exemple de particules multicouches de type coeur-écorce (core-shell). L'additif DURASTRENGTH® D320 commercialisé par ARKEMA peut être par exemple utilisé. Ces particules peuvent être par exemple du type mou-dur ou dur-mou-dur.

**S'agissant du polymère thermoplastique qui est revêtu par la composition méthacrylique ignifugée,** celui-ci peut être par exemple un polyester saturé (PET, PETg, PBT,...), l'ABS, le SAN (copolymère styrène-acrylonitrile), l'ASA (copolymère acrylique-styrène-acrylonitrile), un polystyrène (cristal ou choc), un polypropylène (PP), un polyéthylène (PE), le polycarbonate (PC), le PPO, un polysulphone, le PVC, le PVC chloré (PVCC), le PVC expansé.

Il peut s'agir aussi d'un mélange de deux ou plusieurs polymères thermoplastiques de la liste précédente. Par exemple, il peut s'agir d'un mélange PPO/PS ou PC/ABS.

**S'agissant de l'agent ignifugeant,** celui-ci est choisi parmi les composés de formules (I) ou (II) : 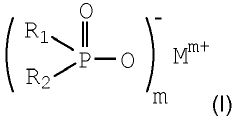 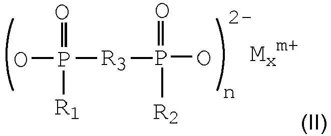 dans lesquelles :
R₁ et R₂ désignent des groupements alkyle en C₁-C₆, linéaires ou branchés et/ou aryle ;
R₃ désigne un groupement alkylène en C₁-C₁₀, linéaire ou branché, arylène en C₆-C₁₀, alkylarylène ou arylalkylène ;
M désigne Mg, Ca, Al, Sb, Sn, Ge, Ti, Zn, Fe, Zr, Ce, Bi, Sr, Mn, Li, Na, K ;
m est un entier entre 1 et 4 ;
n est un entier entre 1 et 4 ;
x est un entier entre 1 et 4.

On peut aussi combiner deux ou plusieurs agents ignifugeants de formule (I) ou (II). Avantageusement, M désigne Ca, Al ou Zn. De préférence, M désigne Al.

R₁ et R₂ sont de préférence des groupements alkyle comme par exemple des groupements méthyle, éthyle, n-propyle, isopropyle, n-butyle, tert-butyle, n-pentyle et/ou phényle.

R₃ est de préférence le groupement méthylène, éthylène, n-propylène, isopropylène, n-butylène, tert-butylène, n-pentylène, n-octylène ou n-docécylène. Il peut s'agir aussi du groupement phénylène, méthylphénylène, éthylphénylène, tert-butylphénylène, méthylnaphtylène, phényléthylène, phényléthylène, phénylpropylène ou naphtalène.

De préférence, on utilise un agent ignifugeant de formule (I) dans lequel M désigne Al et R₁ et R₂ désignent tous deux un groupement alkyle en C₁-C₆. De préférence, R₁ et R₂ sont tous deux des groupements éthyle ou bien un groupement éthyle et un groupement méthyle c'est-à-dire que l'agent ignifugeant correspond à un produit de formule (III) ou (IV) : 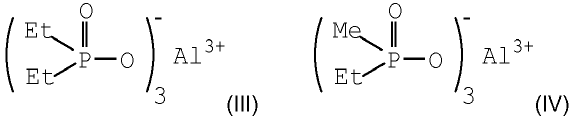 De préférence, de façon à obtenir une bonne dispersion dans le polymère méthacrylique, l'agent ignifugeant se présente sous forme de particules dont le diamètre moyen D₅₀ (Microtrac) est compris entre 0,5 et 10 µm, avantageusement entre 1 et 5 µm. L'efficacité de l'agent ignifugeant peut être optimale si l'agent ignifugeant se disperse de façon homogène.

L'agent ignifugeant peut être utilisé seul ou bien associé à au moins un autre composé ignifugeant qui permette de renforcer l'efficacité de l'agent ignifugeant. La composition méthacrylique peut donc comprendre de façon optionnelle au moins un autre composé ignifugeant, choisi par exemple dans la liste suivante:
- composés phosphorés tels que les phosphates organiques ;
- composés du silicium tels que par exemple les silicates, zéolithes, silices, les siloxanes ;
- composés du magnésium tels que par exemple l'hydroxyde de magnésium, le carbonate de magnésium, l'oxyde de magnésium, l'hydrotalcite, le dihydrotalcite,... ;
- composés du calcium tels que par exemple l'hydroxyde de calcium, l'oxyde de calcium, le carbonate de calcium,... ;
- composés du zinc tels que par exemple l'oxyde de zinc, l'hydroxyde de zinc, l'oxyde de zinc hydraté,... ;
- composés de l'aluminium tels que par exemple l'oxyde d'aluminium, l'hydroxyde d'aluminium, le phosphate d'aluminium,... ;
- composés du titane tels que les oxydes de titane,...
- composés de l'antimoine tels que par exemple le trioxyde d'antimoine, le tétroxyde d'antimoine, le tartrate d'antimoine,...

L'autre composé ignifugeant peut être également un polymère ne comprenant pas d'halogène qui aurait de meilleures propriétés ignifuges que le polymère méthacrylique, par exemple le polycarbonate. L'autre composé n'est pas un produit de réaction entre l'acide phosphorique et la mélamine et/ou un produit de réaction entre l'acide phosphorique et un dérivé de condensation de la mélamine, ni un dérivé de condensation de la mélamine, ni un composé halogéné, notamment bromé.

**S'agissant de la composition méthacrylique ignifugée,** la Demanderesse a constaté qu'il est possible que la composition méthacrylique soit V1 selon le test UL-94 en présence d'une proportion minimale d'agent ignifugeant (en dessous, la composition n'est pas V1). Cependant, il convient de ne pas dépasser une proportion maximale d'agent ignifugeant sous peine de dégrader les propriétés mécaniques de la composition et de la rendre difficilement transformable. Le compoundage de l'agent ignifugeant et du polymère méthacrylique devient également plus difficile. Ainsi, la proportion d'agent ignifugeant doit être comprise en poids entre 15 et 25 parts, avantageusement entre 17 et 25 parts, de préférence entre 17 et 23 parts, de façon encore plus préférentielle entre 19 et 22 parts pour 100 parts de polymère méthacrylique. Dans les proportions envisagées, l'agent ignifugeant permet d'obtenir une très bonne ignifugation tout en conservant les autres caractéristiques que sont par exemple la fluidité et la résistance thermomécanique. De façon surprenante, ces deux propriétés ne sont pas significativement modifiées après le compoundage alors qu'avec de nombreux agents ignifugeants qui sont « halogen-free » tels que les esters de phosphates par exemple, le VICAT est fortement altéré.

La composition méthacrylique ignifugée est opaque, elle permet d'obtenir un bon état de surface, une bonne résistance à la rayure et une bonne tenue UV. Il n'est donc pas nécessaire d'utiliser une peinture de protection comme c'est le cas par exemple pour des mélanges de polycarbonate et d'ABS ignifugés. De préférence, la composition est sans composé ignifugeant halogéné, notamment bromé.

Le test UL-94 est un test largement utilisé dans le domaine de l'ignifugation des matériaux polymère. Il permet d'évaluer la capacité d'un matériau qui a été enflammé à éteindre la flamme. Le test permet d'accorder une note selon la vitesse de combustion, le temps nécessaire pour que la flamme s'éteigne, le fait qu'il y ait ou non des goutellettes enflammées,... La notation selon le test UL-94 s'accompagne toujours de l'épaisseur de l'échantillon. Les notations du test UL-94 sont les suivantes :
- HB : combustion lente avec échantillon horizontal et vitesse de combustion < 76 mm/min pour une épaisseur < 3 mm.
- V-1 : la combustion s'arrête au bout de 30 secondes pour un échantillon vertical, aucune goutellette enflammée
- V-0 : la combustion s'arrête au bout de 10 secondes pour un échantillon vertical, aucune goutellette

La composition méthacrylique ignifugée est obtenue par compoundage à l'état fondu du polymère méthacrylique, d'au moins un agent ignifugeant de formule (I) ou (II) et éventuellement d'au moins un autre composé ignifugeant. Cette opération est réalisée dans tout outil de mélange des polymères thermoplastiques que connaît l'homme du métier. Il s'agit par exemple d'un malaxeur ou d'une extrudeuse, par exemple une extrudeuse bivis.

La composition méthacrylique peut comprendre un ou plusieurs autre(s) additif(s) qui apporte(nt) d'autres fonctions. Il peut s'agir d'un colorant organique ou d'un pigment minéral coloré, d'un plastifiant, d'un additif anti-UV, d'un stabilisant lumière ou chaleur, d'un antioxydant, d'une charge diffusant la lumière ou apportant de la matité.

La composition méthacrylique peut aussi comprendre un ou plusieurs autre(s) polymère(s) thermoplastique(s) compatible(s) ou non, de façon à renforcer certaines propriétés. Il peut s'agir par exemple de polycarbonate (PC) ou d'un modifiant choc dont la fonction est d'améliorer la résistance à l'impact. Il peut s'agir par exemple d'un modifiant choc sous forme de particules multicouches de type coeur-écorce (core-shell).

### Utilisation de la composition méthacrylique ignifugée

La composition selon l'invention peut être transformée avec les techniques habituelles de transformation des thermoplastiques. Elle peut être extrudée, injectée ou moulée. Elle peut par exemple être transformée pour obtenir des capots de téléviseurs, des couvercles et capots d'appareils électriques ou électroniques, des profilés ou encore de feuilles thermoformables.

Elle peut aussi être appliquée sur un polymère thermoplastique (par exemple par coextrusion) de façon à obtenir un revêtement ignifuge qui améliore la résistance à la rayure et aux UV. Dans le cas où le polymère thermoplastique présente une bonne tenue au feu, le revêtement ignifuge améliore ces propriétés mais sans toutefois dégrader la tenue au feu (voir exemples 5-8), que celle-ci soit intrinsèque au polymère thermoplastique ou obtenue à l'aide d'une formulation ignifugeante. La compression à chaud des couches est une technique utilisable pour appliquer le revêtement. On peut aussi utiliser une technique de coinjection ou de multiinjection. La technique de multiinjection consiste à injecter dans un même moule les matières fondues constituant chacune des couches. Selon une 1^{ère} technique de multiinjection, les matières fondues sont injectées en même temps dans le moule. Selon une 2^{ème} technique, un insert mobile est situé dans le moule. Par cet insert, on injecte dans le moule une matière fondue, puis l'insert mobile est déplacé pour injecter une autre matière fondue.

La technique préférée est la coextrusion qui s'appuie sur l'utilisation d'autant d'extrudeuses qu'il y a de couches à extruder (pour plus de détails, on pourra se reporter à l'ouvrage Principles of Polymer Processing de Z.Tadmor, édition Wiley, 1979). Cette technique est plus souple que les précédentes et permet d'obtenir des structures multicouches même pour aux géométries compliquées, par exemple des profilés. Elle permet aussi d'avoir une excellente homogénéité mécanique. La technique de coextrusion est une technique connue en transformation des thermoplastiques (voir par exemple : Précis de matières plastiques, Structures-propriétés, 1989, mise en oeuvre et normalisation 4ème édition, Nathan, p. 126). Les documents EP 1174465**,** US 5318737**,** WO 0008098 ou GB 2071007 A1 décrivent le procédé de coextrusion avec un polymère thermoplastique (procédé « capstock »). Le procédé « capstock » consiste extruder sous forme de nappes les matières plastiques, et de réunir ces nappes face contre face, puis à laisser solidifier la structure multicouche obtenue.

L'invention est aussi relative à un procédé consistant à superposer dans l'ordre par coextrusion, notamment par le procédé « capstock », par compression à chaud ou par multiinjection:
- une couche (I) comprenant la composition méthacrylique ignifugée,
- une couche (II) comprenant le polymère thermoplastique.
Eventuellement entre les couches (I) et (II), on peut disposer une couche intermédiaire (c'est-à-dire que l'on a dans l'ordre disposées l'une contre l'autre : couche (I) / couche intermédiaire / couche (II)). Celle-ci peut avoir par exemple pour fonction d'assurer l'adhésion entre les deux couches (I) et (II). Un exemple de couche intermédiaire assurant l'adhésion entre les couches est donnée par exemple dans WO 2006053984**.**

L'invention est aussi relative à une structure multicouche comprenant :
- une couche (I) comprenant la composition méthacrylique ignifugée,
- une couche (II) comprenant le polymère thermoplastique.
ainsi qu'une éventuelle couche intermédiaire disposée entre les couches (I) et (II).

L'épaisseur de la couche (I) est en général plus faible que celle de la couche (II) et varie de 10 à 700 µm.

### [Exemples]

Les produits suivants ont été utilisés:
**ALTUGLAS® V920 T** : PMMA commercialisé par la société ALTUGLAS INT.
**ALTUGLAS® DR 2T :** PMMA résistant à l'impact (à l'aide de particules multicouches) commercialisé par ALTUGLAS INT.
**EXOLIT® OP-930** : agent ignifugeant commercialisé par la société CLARIANT. Il s'agit d'une poudre dont le diamètre moyen D₅₀ (Microtrac) est de 3 µm environ (densité : 1,35 g/cm³, teneur en phosphore : 23%poids).
**EXOLIT® OP-1230** : agent ignifugeant commercialisé par la société CLARIANT. Il s'agit d'une poudre dont le diamètre moyen D₅₀ (Microtrac) est entre 20 et 40 µm environ.

### Exemple 1 (selon l'invention)

La composition méthacrylique est obtenue en mélangeant à l'aide d'une extrudeuse bivis à un débit de 5 kg/h du V920 T (80% poids) et de l'EXOLIT® OP-930 (20% poids). L'EXOLIT® OP-930 se disperse bien dans la résine. On obtient des résultats identiques avec l'OP-1230.

### Exemple 2 (comparatif)

Cet exemple est réalisé avec le V920 T seul sans agent ignifugeant.

### Exemple 3 (selon l'invention)

On reprend les conditions de l'exemple 1 avec du DR 2T et de l'OP-1230.

### Exemple 4 (comparatif)

Cet exemple est réalisé avec le DR 2T seul sans agent ignifugeant.

**Tableau I**

| **Ex.** | **MFI, g/10 min (230°C, 3,8 kg) selon ISO-1133** | **VICAT (50°C) selon ISO-306** | **note selon UL-94** |
|---|---|---|---|
| **1 (inv.)** | 4 | 104 | V1, 3,2 mm |
| **2 (comp.)** | 5 | 103 | HB |
| **3 (inv.)** | 1,0 | 86,3 | V1, 3,2 mm |
| **4 (comp.)** | 1,3 | 82,8 | HB |

On constate que les deux EXOLIT® (OP-930 ou l'OP-1230) permettent d'obtenir une très bonne ignifugation tout en conservant les autres caractéristiques que sont la fluidité et la résistance thermomécanique (VICAT). De façon surprenante, ces deux propriétés n'ont pas été significativement modifiées après le compoundage alors qu'avec de nombreux ignifugeants qui sont « halogen-free » tels que les esters de phosphates par exemple, le VICAT est fortement altéré.

A cette teneur de 20%, on a constaté une bonne dispersion de l'EXOLIT et une bonne compatiblité mais il a été constaté qu'à des teneurs supérieures à 25%, l'agent ignifugeant ne se disperse plus aussi bien, ce qui a même pour effet de réduire son efficacité.

### Exemples 5-8

On a réalisé des essais de coextrusion (par le procédé capstock) sur de l'ABS. On a utilisé deux extrudeuses dont les têtes sont reliées à une boîte de répartition (feedblock), puis à une filière plate et finalisation par un passage dans une station de calandrage avec 3 cylindres verticaux. On prépare ainsi des bandes bicouches PMMA (0,3 mm) / ABS (2,7 mm). L'ABS utilisé est V0 (UL-94) et ne contient pas de dérivé halogéné. Ces bandes sont ensuite découpées pour réaliser des échantillons pour les caractérisations feu.

**Tableau II**

| **Ex.** | **ABS (2,7 mm) / composition méthacrylique (0,3 mm)** | **Test de combustion vertical selon procédure UL-94** |
|---|---|---|
| **5 (comp.)** | DR 2T | goutellettes ; pas de classement |
| **6 (comp.)** | 85% DR 2T + 15% OP-1230 | goutellettes ; pas de classement |
| **7 (inv.)** | 80% DR 2T + 20% OP-1230 | aucune goutellette ; comportement similaire à l'ABS seul |
| **8 (comp.)** | 70% DR 2T + 30% OP-1230 | difficultés à extruder la composition méthacrylique |

On constate à l'exemple 7 que les bandes présentent un comportement au feu similaire à celui de l'ABS seul (pas dégradé) tout en ayant par ailleurs une tenue UV et à la rayure améliorée (par la couche de PMMA).

## Revendications

1. Composition méthacrylique ignifugée à base d'un polymère méthacrylique comprenant pour 100 parts de polymère méthacrylique de 15 à 25 parts, avantageusement de 17 à 25 parts, de préférence de 17 à 23 parts, de façon encore plus préférentielle de 19 à 22 parts d'au moins un agent ignifugeant de formule (I) ou (II) : 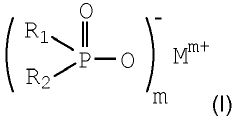 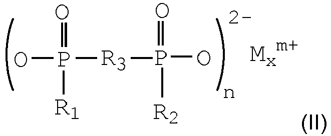 dans lesquelles :
R₁ et R₂ désignent des groupements alkyle en C₁-C₆, linéaires ou branchés et/ou aryle ;
R₃ désigne un groupement alkylène en C₁-C₁₀, linéaire ou branché, arylène en C₆-C₁₀,
alkylarylène ou arylalkylène ;
M désigne Mg, Ca, Al, Sb, Sn, Ge, Ti, Zn, Fe, Zr, Ce, Bi, Sr, Mn, Li, Na, K ;
m est un entier entre 1 et 4 ;
n est un entier entre 1 et 4 ;
x est un entier entre 1 et 4.
et le polymère méthacrylique est un copolymère de méthacrylate de méthyle (MAM) comprenant en poids au moins 70% de MAM.

2. Composition ignifugée selon la revendication 1 dans laquelle R₁ et R₂ sont groupements méthyle, éthyle, n-propyle, isopropyle, n-butyle, tert-butyle, n-pentyle et/ou phényle.

3. Composition ignifugée selon les revendications 1 ou 2 dans laquelle R₃ est le groupement méthylène, éthylène, n-propylène, isopropylène, n-butylène, tert-butylène, n-pentylène, n-octylène ou n-docécylène, il peut s'agir aussi du groupement phénylène, méthylphénylène, éthylphénylène, tert-butylphénylène, méthylnaphtylène, phényléthylène, phényléthylène, phénylpropylène ou naphtalène.

4. Composition ignifugée selon la revendication 1 dans laquelle l'agent ignifugeant est de formule (I) et M désigne Al et R₁ et R₂ désignent tous deux un groupement alkyle en C₁-C₆.

5. Composition ignifugée selon la revendication 4 dans laquelle l'agent ignifugeant a la formule (III) ou (IV) :

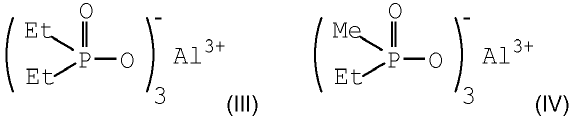

6. Composition ignifugée selon l'une quelconque des revendications 1 à 5 dans laquelle l'agent ignifugeant se présente sous forme de particules dont le diamètre moyen D₅₀ (Microtrac) est compris entre 0,5 et 10 µm, avantageusement entre 1 et 5 µm.

7. Procédé consistant à superposer dans l'ordre par coextrusion, par compression à chaud ou par multiinjection:
• une couche (I) comprenant la composition méthacrylique ignifugée telle que définie à l'une quelconque des revendications 1 à 6;
• une couche (II) comprenant le polymère thermoplastique.

8. Procédé selon la revendication 7 dans lequel R₁ et R₂ sont groupements méthyle, éthyle, n-propyle, isopropyle, n-butyle, tert-butyle, n-pentyle et/ou phényle et laquelle R₃ est le groupement méthylène, éthylène, n-propylène, isopropylène, n-butylène, tert-butylène, n-pentylène, n-octylène ou n-docécylène, il peut s'agir aussi du groupement phénylène, méthylphénylène, éthylphénylène, tert-butylphénylène, méthylnaphtylène, phényléthylène, phényléthylène, phénylpropylène ou naphtalène.

9. Procédé selon la revendication 7 dans lequel l'agent ignifugeant est de formule (I) et M désigne Al et R₁ et R₂ désignent tous deux un groupement alkyle en C₁-C₆.

10. Procédé selon la revendication 9 dans lequel l'agent ignifugeant a la formule (III) ou (IV) :

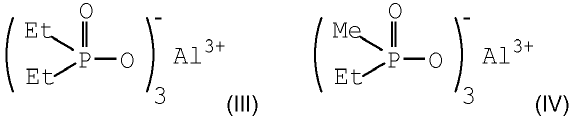

11. Procédé selon l'une quelconque des revendications 7 à 10 **caractérisé en ce qu'**on dispose une couche intermédiaire entre les couches (I) et (II).

12. Procédé selon l'une quelconque des revendications 7 à 11 **caractérisé en ce que** le polymère thermoplastique est un polyester saturé, l'ABS, un copolymère styrène-acrylonitrile, un copolymère acrylique-styrène-acrylonitrile (ASA), un polystyrène, un polypropylène, un polyéthylène, un polycarbonate, le PPO, un polysulphone, le PVC, le PVC chloré (PVCC), le PVC expansé.

13. Structure multicouche comprenant :
• une couche (I) comprenant la composition méthacrylique ignifugée telle que définie à l'une quelconque des revendications 1 à 6,
• une couche (II) comprenant un polymère thermoplastique, de préférence tel que défini à la revendication 12,
ainsi qu'une éventuelle couche intermédiaire disposée entre les couches (I) et (II).

14. Utilisation de la composition ignifugée selon l'une quelconque des revendications 1 à 6 pour l'obtention de capots de téléviseurs, de couvercles et capots d'appareils électriques ou électroniques, de profilés, de feuilles thermoformables.

15. Utilisation de la composition ignifugée selon l'une quelconque des revendications 1 à 6 pour obtenir un revêtement ignifuge résistant à rayure et aux UV.

## Patentansprüche

1. Flammgeschützte Methacrylzusammensetzung auf Basis eines Methacrylpolymers, umfassend für 100 Teile Methacrylpolymer 15 bis 25 Teile, vorteilhafterweise 17 bis 25 Teile, vorzugsweise 17 bis 23 Teile, noch stärker bevorzugt 19 bis 22 Teile wenigstens eines Flammschutzmittels der Formel (I) oder (II): 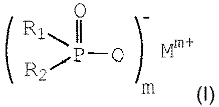 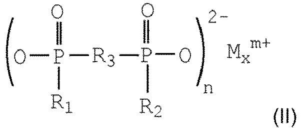 wobei:
R₁ und R₂ für lineare oder verzweigte C₁-C₆-Alkyl- und/oder Arylgruppen stehen;
R₃ für eine lineare oder verzweigte C₁-C₁₀-Alkylengruppe, C₆-C₁₀-Arylen-, Alkylarylen- oder
Arylalkylengruppe steht;
M für Mg, Ca, Al, Sb, Sn, Ge, Ti, Zn, Fe, Zr, Ce, Bi, Sr, Mn, Li, Na, K steht;
m eine Ganzzahl zwischen 1 und 4 ist;
n eine Ganzzahl zwischen 1 und 4 ist;
x eine Ganzzahl zwischen 1 und 4 ist;
und das Methacrylpolymer ein Methylmethacrylat-(MMA)-Copolymer ist, das wenigstens 70 Gew.-% MMA enthält.

2. Flammgeschützte Zusammensetzung nach Anspruch 1, wobei R₁ und R₂ Methyl-, Ethyl-, n-Propyl-, Isopropyl-, n-Butyl-, tert-Butyl-, n-Pentyl- und/oder Phenylgruppen sind.

3. Flammgeschützte Zusammensetzung nach Anspruch 1 oder 2, wobei R₃ eine Methylen-, Ethylen-, n-Propylen-, Isopropylen-, n-Butylen-, tert-Butylen-, n-Pentylen-, n-Octylen- oder n-Dodecylengruppe ist es sich auch um eine Phenylen-, Methylphenylen-, Ethylphenylen-, tert-Butylphenylen-, Methylnaphtylen-, Phenylethylen-, Phenylethylen-, Phenylpropylen- oder Naphtalingruppe handeln kann.

4. Flammgeschützte Zusammensetzung nach Anspruch 1, wobei das Flammschutzmittel die Formel (I) aufweist und M für Al steht und R₁ und R₂ beide für eine C₁-C₆-Alkylgruppe stehen.

5. Flammgeschützte Zusammensetzung nach Anspruch 4, wobei das Flammschutzmittel die Formel (III) oder (IV) aufweist:

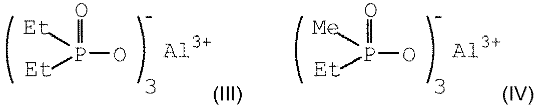

6. Flammgeschützte Zusammensetzung nach einem der Ansprüche 1 bis 5, wobei das Flammschutzmittel in Form von Partikeln vorliegt, deren mittlerer Durchmesser D₅₀ (Microtrac) zwischen 0,5 und 10 µm, vorteilhafterweise zwischen 1 und 5 µm liegt.

7. Verfahren, das darin besteht, durch Coextrusion, durch Heißpressen oder durch Multiinjektion in dieser Reihenfolge Folgendes übereinanderzulagern:
• eine Schicht (I), welche die flammgeschützte Methacrylzusammensetzung umfasst, wie sie in einem der Ansprüche 1 bis 6 definiert ist;
• eine Schicht (II), welche das thermoplastische Polymer umfasst.

8. Verfahren nach Anspruch 7, wobei R₁ und R₂ Methyl-, Ethyl-, n-Propyl-, Isopropyl-, n-Butyl-, tert-Butyl-, n-Pentyl- und/oder Phenylgruppen sind und wobei R₃ eine Methylen-, Ethylen-, n-Propylen-, Isopropylen-, n-Butylen-, tert-Butylen-, n-Pentylen-, n-Octylen- oder n-Dodecylengruppe ist, es sich auch um eine Phenylen-, Methylphenylen-, Ethylphenylen-, tert-Butylphenylen-, Methylnaphtylen-, Phenylethylen-, Phenylethylen-, Phenylpropylen- oder Naphtalingruppe handeln kann.

9. Verfahren nach Anspruch 7, wobei das Flammschutzmittel die Formel (I) aufweist und M für Al steht und R₁ und R₂ beide für eine C₁-C₆-Alkylgruppe stehen.

10. Verfahren nach Anspruch 9, wobei das Flammschutzmittel die Formel (III) oder (IV) aufweist:

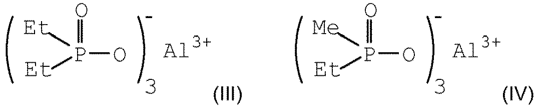

11. Verfahren nach einem der Ansprüche 7 bis 10, **dadurch gekennzeichnet, dass** eine Zwischenschicht zwischen den Schichten (I) und (II) angeordnet wird.

12. Verfahren nach einem der Ansprüche 7 bis 11, **dadurch gekennzeichnet, dass** das thermoplastische Polymer ein gesättigter Polyester, ABS, ein Styrol-Acrylnitril-Copolymer, ein Acryl-Styrol-Acrylnitril-Copolymer (ASA), ein Polystyrol, ein Polypropylen, ein Polyethylen, ein Polycarbonat, PPO, ein Polysulfon, PVC, chloriertes PVC (CPVC), expandiertes PVC ist.

13. Mehrschichtige Struktur, umfassend:
• eine Schicht (I), welche die flammgeschützte Methacrylzusammensetzung umfasst, wie sie in einem der Ansprüche 1 bis 6 definiert ist;
• eine Schicht (II), welche ein thermoplastisches Polymer umfasst, vorzugsweise wie es in Anspruch 12 definiert ist,
sowie eine eventuelle Zwischenschicht, die zwischen den Schichten (I) und (II) angeordnet ist.

14. Verwendung der flammgeschützten Zusammensetzung nach einem der Ansprüche 1 bis 6 zum Erhalt von Gehäusen für Fernsehgeräte, Abdeckungen und Gehäusen für elektrische oder elektronische Geräte, Profilen, thermoformbaren Folien.

15. Verwendung der flammgeschützten Zusammensetzung nach einem der Ansprüche 1 bis 6 zum Erhalt einer flammsicheren Beschichtung, die kratz- und UVbeständig ist.

## Claims

1. Flame-retardant methacrylic composition based on a methacrylic polymer comprising, per 100 parts of methacrylic polymer, from 15 to 25 parts, advantageously from 17 to 25 parts, preferably from 17 to 23 parts, more preferentially still from 19 to 22 parts, of at least one flame-retardant agent of formula (I) or (II): 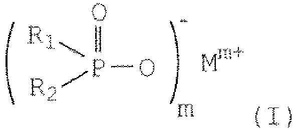 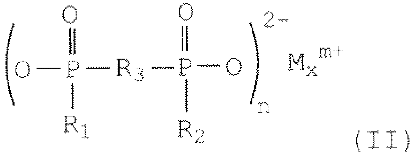 in which:
R₁ and R₂ denote linear or branched C₁-C₆ alkyl groups and/or aryl groups;
R₃ denotes a linear or branched C₁-C₁₀ alkylene group, a C₆-C₁₀ arylene group, an alkylarylene group or an arylalkylene group;
M denotes Mg, Ca, Al, Sb, Sn, Ge, Ti, Zn, Fe, Zr, Ce, Bi, Sr, Mn, Li, Na or K;
m is an integer between 1 and 4;
n is an integer between 1 and 4;
x is an integer between 1 and 4,
and the methacrylic polymer is a methyl methacrylate (MMA) copolymer comprising, by weight, at least 70% of MMA.

2. Flame-retardant composition according to Claim 1, in which R₁ and R₂ are methyl, ethyl, n-propyl, isopropyl, n-butyl, tert-butyl, n-pentyl and/or phenyl groups.

3. Flame-retardant composition according to Claim 1 or 2, in which R₃ is the methylene, ethylene, n-propylene, isopropylene, n-butylene, tert-butylene, n-pentylene, n-octylene or n-dodecylene group, it can also be the phenylene, methylphenylene, ethylphenylene, tert-butylphenylene, methylnaphthylene, phenylethylene, phenylpropylene or naphthylene group.

4. Flame-retardant composition according to Claim 1, in which the flame-retardant agent is of formula (I) and M denotes Al and R₁ and R₂ both denote a C₁-C₆ alkyl group.

5. Flame-retardant composition according to Claim 4, in which the flame-retardant agent has the formula (III) or (IV):

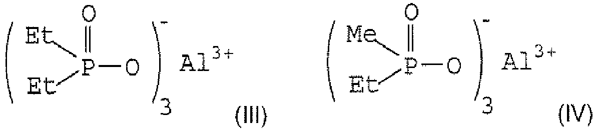

6. Flame-retardant composition according to any one of Claims 1 to 5, in which the flame-retardant agent is provided in the form of particles having a mean diameter D50 (Microtrac) of between 0.5 and 10 µm, advantageously between 1 and 5 µm.

7. Process consisting in superimposing, in order, by coextrusion, by hotpressing or by multiinjection-moulding:
• a layer (I) comprising the flame-retardant methacrylic composition as defined in any one of Claims 1 to 6,
• a layer (II) comprising the thermoplastic polymer.

8. Process according to Claim 7, in which R₁ and R₂ are methyl, ethyl, n-propyl, isopropyl, n-butyl, tert-butyl, n-pentyl and/or phenyl groups and in which R₃ is the methylene, ethylene, n-propylene, isopropylene, n-butylene, tert-butylene, n-pentylene, n-octylene or n-dodecylene group, they can also be the phenylene, methylphenylene, ethylphenylene, tert-butylphenylene, methylnaphthylene, phenylethylene, phenylpropylene or naphthylene group.

9. Process according to Claim 7, in which the flame-retardant agent is of formula (I) and M denotes Al and R₁ and R₂ both denote a C₁-C₆ alkyl group.

10. Process according to Claim 9, in which the flame-retardant agent has the formula (III) or (IV):

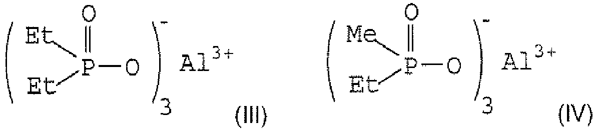

11. Process according to any one of Claims 7 to 10, **characterized in that** an intermediate layer is positioned between the layers (I) and (II).

12. Process according to any one of Claims 7 to 11, **characterized in that** the thermoplastic polymer is a saturated polyester, ABS, a styrene/acrylonitrile copolymer, an acrylic/styrene/acrylonitrile (ASA) copolymer, a polystyrene, a polypropylene, a polyethylene, polycarbonate, PPO, a polysulphone, PVC, chlorinated PVC (CPVC) or expanded PVC.

13. Multilayer structure comprising:
• a layer (I) comprising the flame-retardant methacrylic composition as defined in any one of Claims 1 to 6,
• a layer (II) comprising a thermoplastic polymer, preferably as defined in Claim 12,
and an optional intermediate layer positioned between the layers (I) and (II).

14. Use of the flame-retardant composition according to any one of Claims 1 to 6 for obtaining casings for televisions, covers and casings for electrical or electronic appliances, profiles or thermoformable sheets.

15. Use of the flame-retardant composition according to any one of Claims 1 to 6 for obtaining a flame-retardant coating which is resistant to scratching and to UV radiation.
